# EUROPEAN PATENT APPLICATION

(11) **EP 4 656 519 A1**
(43) Date of publication of application: **03.12.2025**
(21) Application number: 24178942.9
(22) Date of filing: 29.05.2024
(51) Int. Cl.: B64D 13/06

(54) **AIR DISTRIBUTION SYSTEM WITH INTEGRATED UTILITY LINE**

(71) Applicant: AIRBUS Operations GmbH, 21129 Hamburg (DE)
(72) Inventor: Hegenbart, Matthias, Hamburg (DE); Albers, Frederik, Hamburg (DE); Lohmar, Jens, Hamburg (DE); Ohlfest, Carsten, Hamburg (DE)

(57) **Abstract**

The present disclosure relates to an air distribution system (100) for an aircraft and comprises at least one fabric air manifold (112, 115), and a utility line (212, 215, 216) attached to the at least one fabric air manifold.

## Description

The present disclosure generally relates to a fabric air distribution system for an aircraft having a utility line integrated therein. In particular, the present disclosure relates to an air distribution system and an aircraft having such a system, where at least one fabric air manifold is provided and a utility line is attached to the manifold.

A conventional aircraft is equipped with rigid air ducts that are mounted to a (primary) structure of the aircraft using a plurality of brackets or holders. The installation of such air distribution with rigid ducts is time intensive due to the plurality of brackets or holders to be mounted.

A further approach is the use of a fabric longitudinal manifold that may be provided in a crown area of the aircraft cabin. For instance, the fabric manifold can be provided between a ceiling lining and the installation of the top/crown portion of the aircraft fuselage. This facilitates installation of the air distribution system and reduces the number of components to be installed compared to a rigid duct air distribution system.

Nevertheless, there is still a need to further improve aircraft components to thereby facilitate aircraft assembly.

It is therefore an object of the present disclosure to provide an improved air distribution system, particularly saving time and costs during aircraft assembly.

This object is solved by the present invention as defined in the independent claims. Preferred embodiments are defined by the dependent claims.

According to a first aspect to better understand the present disclosure, an air distribution system for an aircraft comprises at least one fabric air manifold, and a utility line attached to the at least one fabric air manifold.

The fabric air manifold is made from a fabric material that is airtight and has a closed cross shape. Thus, introducing air into such manifold inflates the fabric air manifold. It is to be understood that at the fabric air manifold is closed at a longitudinal end thereof or is fluidly coupled to a further air distribution component (including an air outlet), in order to be airtight and in order to allow inflation of the manifold. This allows the fabric air manifold to adapt to any surrounding structures, components or the like (in cross-sectional or radial direction) without requiring specifically defined installation space of the manifold. For instance, compared to conventional rigid air ducts, an unspecified free space between two components is sufficient for a fabric air manifold.

As a mere example, a space between a primary structure of a fuselage of an aircraft (or any insulation provided thereon) and an interior component, such as a ceiling lining, an overhead stowage compartment, a sidewall lining, a monument, etc. can be employed to place the deflated fabric air manifold therein. Once air is introduced into the manifold, it inflates and the fabric will achieve a cross-sectional shape specified by the size and form of the fabric. It is irrelevant for the fabric air manifold, whether it is spaced apart from or contacts any surrounding component (or primary structure or insulation). Due to the flexibility of the fabric there is less or no influence on other surrounding components compared to conventional rigid air ducts.

Since utility lines are often installed in the same area of the aircraft as an air duct, attaching the utility line to such fabric air manifold facilitates installation of the utility line. Specifically, the utility line can be attached to the fabric air manifold before the manifold is installed in the aircraft. Thus, during installation of the fabric air manifold, the utility line is installed simultaneously, which reduces the overall installation time significantly. In addition, there is no necessity to provide brackets or holders for the utility lines, which reduces the number of components installed in the aircraft and, hence, reduces installation time and costs of assembling the aircraft.

In an implementation variant, the utility line can comprise one or more of an electric power cable, a data cable, a power and/or data distribution hardware, a fluid line, and a fluid distribution hardware, such as a water line or gas line and associated distribution hardware. Thus, a utility line in accordance with the present disclosure, is directed to any line of a utility network or distribution network, including the distribution of electricity, data, water and gas. The gas can be, for example, oxygen. It is to be understood that the utility line can also include a waste water line. The utility line is part of a network laid out through the aircraft.

Furthermore, the utility line is not restricted to a single cable or wire, but can also include hardware components, such as components for distributing electric power, data, water or gas. By providing hardware in/on the fabric air manifold the assembly of the aircraft and installation of interior components can further be reduced with respect to time and costs.

Conventional water lines in an aircraft require specific components for operating the water network. For instance, in order to avoid freezing of water in a water line that runs in an area that is at risk of freezing temperatures, conventionally, electrical heating components are provided along the waterline.

The present disclosure, on the other hand, allows installing the water line along the fabric air manifold, which conducts air regularly at a temperature above 0°C. Thus, the waterline is not at risk of freezing, as it is in the vicinity of or surrounded by the air conducted through the fabric air manifold. Besides the faster and easier installation of such utility line, the omission of electrical heating components further reduces weight and installation costs, and the electric wiring to such heating component can also be omitted.

In addition, the air temperature in the fabric air manifold (i.e. an air distribution network/duct work) and the thermal influence of the air around the manifold is known. Thus, a temperature analysis of the path of ducting a water line can be omitted or at least reduced.

Furthermore, the water in a water line may be at risk of accumulation of bacteria, if the water temperature exceeds approximately 30°C. By installing the water line along the fabric air manifold, the temperature of the water in the waterline will be kept below such critical temperature, since the air conducted through the fabric air manifold is regularly considerably below 30°C.

In an implementation variant, the at least one fabric air manifold can comprise one or more of a riser duct, a lateral cross duct, a lateral air outlet distributor or box, a longitudinal (component) manifold, a longitudinal crown manifold, and a longitudinal base manifold. A riser duct is regularly installed in a cross-sectional plane of the aircraft and runs in a substantially circumferential direction. As a mere example, a riser duct can fluidly connect any longitudinal manifold provided at different vertical levels in the aircraft. For instance, a riser duct can fluidly connect a longitudinal base manifold (e.g., arranged underneath a cabin floor) with another longitudinal manifold or a lateral cross duct or lateral air outlet distributor/box (e.g., arranged above the cabin floor and, hence, in a top region of the aircraft). A longitudinal manifold (such as the longitudinal (component) manifold, the longitudinal crown manifold and the longitudinal base manifold) runs along a longitudinal direction of the aircraft (from a front to aft region of the aircraft), and one of those is regularly fluidly connected to a source of air to be distributed. The longitudinal component manifold can further be arranged between a fuselage of the aircraft and an interior component, such as an overhead stowage compartment, a sidewall (lining), crown or ceiling lining, and a monument. A lateral air outlet distributor/box can likewise extend in a longitudinal direction. While its length in a longitudinal direction is not restricted, it can be shorter than a longitudinal manifold, for example, for distributing air in an associated zone of the aircraft.

Thus, (almost) the entire air distribution system from the source of air (e.g., an air-conditioning unit) can be made from fabric material. As air is to be distributed throughout the aircraft from the front to aft region, the air distribution system will likewise be arranged approximately from the front to aft region of the aircraft or at least the pressurised cabin of the aircraft. Thus, attaching a utility line thereto allows distributing electric power, data lines, fluid lines, etc. throughout the aircraft. In other words, a network for electric power, data, water, and/or gas and/or other fluid can be set up in the aircraft by installing the air distribution system.

In an implementation variant, the at least one fabric air manifold can comprise a pocket, wherein the electric or data line is arranged inside the pocket. The pocket can be understood as a piece of the fabric of which the fabric air manifold is made that forms a loop in the cross-section of the fabric air manifold. The pocket has an interior space sufficient in size to insert the utility line therein. Thus, the utility line is attached to the fabric air manifold by simply providing the pocket at the fabric air manifold.

It is to be understood that the pocket can be made from a different material than the one used to manufacture the fabric air manifold. For instance, the material of the pocket can be a fabric/textile having a similar flexibility as the material of the fabric air manifold.

Alternatively, the material of the pocket can be more rigid, facilitating inserting of the utility line in the pocket. Moreover, a more rigid pocket material further allows stabilising the fabric air manifold. For instance, when no air is provided to the fabric air manifold, the fabric air manifold deflates and its hull (fabric) would collapse. A more rigid material of the pocket may (at least partially) maintain the form of the pocket irrespective of the inflating state of the fabric air manifold. Thus, the electric or data line can have a more specific location in both states of the fabric air manifold, i.e. in the inflated state and the deflated state.

In an implementation variant, the pocket can be arranged in an interior space of the manifold or can be arranged on an exterior surface of the manifold. Providing the pocket in the interior space of the manifold allows defining the outer form of the (inflated) manifold independent of the location of the utility line. Providing the pocket on an exterior surface of the manifold allows easier access to the utility line and does not restrict the cross-sectional area available for conducting air through the manifold.

In an implementation variant, the at least one fabric air manifold is made from a spacer fabric forming a three-dimensional textile, and wherein the utility line is arranged inside of the spacer fabric. A spacer fabric is made from a fabric having a larger thickness compared to a rather two-dimensional fabric, such as a woven fabric. Such larger thickness is achieved by including air spaces inside of the spacer fabric. Such air spaces easily allow to provide the utility line therein. The utility line, hence, is integrated into the fabric air manifold.

Due to the larger thickness of the spacer fabric the fabric air manifold has a high softness/flexibility, which facilitates protection of the utility line arranged therein. In addition, no additional pocket or the like has to be formed, so that a cross-sectional shape of the fabric does not change between portions with a utility line and without a utility line.

In an implementation variant, the utility line is attached to the at least one fabric air manifold using stitching, Velcro, clips, pushbuttons, snap fasteners, gluing, welding and/or brackets. Thus, the utility line can be mounted to the fabric air manifold in any fixed or releasable manner. As a mere example, using Velcro (hook and loop fasteners) allows attaching and removing the utility line to and from the fabric manifold. The same can be achieved using clips, pushbuttons, snap fasteners or the like. Furthermore, in case of Velcro, the hooks can be provided on the utility line, while the loops are provided in/by the fabric air manifold. In other words, the hooks of the "Velcro" may directly hook into the fabric material of the fabric air manifold.

In an implementation variant, the electric or data line can be made from copper or aluminium, or can be a glass fibre.

In an implementation variant, the fluid line can be made from a plastic material, copper, aluminium or titanium. A possible plastic material is poly ether ether ketone (PEEK), polyurethane (PU), or the like, and can also include reinforced plastic materials. Thus, the fluid line can be a flexible hose or pipe that is capable of bending between the inflated and deflated state of the fabric air manifold. Nevertheless, the material of the fluid line can be more rigid than the textile or fabric of the fabric air manifold, in order to support the manifold.

In an implementation variant, the utility line can be arranged at or in a lateral portion and/or top portion of a hull forming the fabric air manifold. The provision of the utility line at or in the lateral and/or top portion of the fabric air manifold allows an installation path of the utility line with a vertical component. Thus, the utility line can be used to form a support for the fabric air manifold. Specifically, when the fabric air manifold is deflated (no air is provided to the manifold), a top portion of the hull forming the fabric air manifold will lie on a bottom portion. Dust or other particles may accumulate inside of the fabric air manifold, which could lead to the top portion adhering to the bottom portion during the deflated state of the manifold. Once the manifold is inflated (again), the manifold may not fully expand (inflate), so that its cross-sectional area available for air distribution is reduced. The utility line can facilitate maintaining the cross-sectional shape of the fabric air manifold, or at least reduce the sagging of the top portion of the manifold, so that the adhering may not occur or may be reduced.

In an implementation variant, the electric power cable and/or data cable can be arranged at a top portion of the hull forming the fabric air manifold, and the water line is arranged at a lateral portion and/or a bottom portion of the hull forming the fabric air manifold. Thus, the fabric air manifold can span between both utility lines, which improves stability of the fabric air manifold when being in the deflated state. In other words, the more utility lines are provided at or in the fabric air manifold, the more will the fabric air manifold be protected from adhering surfaces during the deflated state.

It is to be understood that the position of the electric/data cable on the one hand and the water line on the other hand in the cross-section of the fabric air manifold can be arbitrarily chosen. As a mere example, the electric power cable and/or data cable can be arranged at a lateral and/or bottom portion of the hull forming the fabric air manifold, and the water line can be arranged at a top portion and/or lateral portion of the hull.

In an implementation variant, the utility line can be arranged to run in a longitudinal direction of the fabric air manifold, a transverse direction of the air fabric manifold, or in a zigzag pattern. Particularly in the transverse direction, the utility line can form a ceiling beam and/or an arc providing structural stability to the fabric air manifold. The same applies to the zigzag pattern and the longitudinal arrangement, depending on the length of the utility line. In any case, the arrangement of the utility line reduces or hinders the sagging of the fabric air manifold when deflated.

According to a second aspect to better understand the present disclosure, an aircraft comprises at least one air distribution system of the first aspect or one or more of its variants.

Such aircraft can be assembled in a time and cost-effective manner, since an air distribution and utility line can be prefabricated, and then installed at once in the aircraft.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a cross-section of an aircraft having a conventional air distribution system;
- Figure 2: schematically illustrates one exemplary air distribution system having a utility line attached to a fabric manifold;
- Figure 3: schematically illustrates a perspective view of different fabric air manifold with a utility line attached thereto;
- Figure 4: schematically illustrates several examples of attachment of a utility line to a fabric air manifold; and
- Figure 5: schematically illustrates a connector of a fabric air manifold and associated utility line.

In the following description, for purposes of explanation and not limitation, specific details are set forth in order to provide a thorough understanding of the present disclosure. It will be apparent to one skilled in the art that the present disclosure may be practiced in other implementations that depart from these specific details.

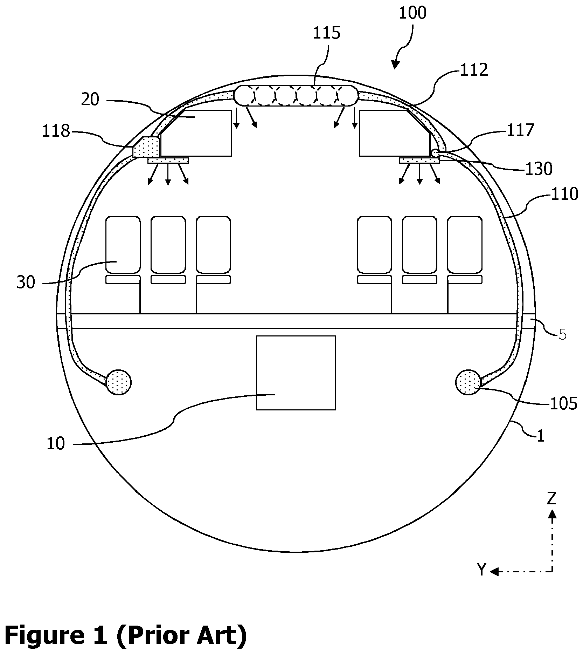

Figure 1 schematically illustrates a cross-section of an aircraft 1 having a conventional air distribution system. The aircraft 1 can have a cabin floor 5 separating a cabin area (on top of the cabin floor 5) from a cargo area (beneath the cabin floor 5). In the cargo area can be an air-conditioning unit 10 or other source of fresh air. In the cabin area can be one or more seat rows 30, above which is a respective overhead stowage compartment 20.

The air-conditioning unit 10 provides air to a longitudinal base manifold 105, which runs in the longitudinal direction of the aircraft 1 (perpendicular to the illustrated Y-Z-plane) and substantially along the entire length of the aircraft 1. Along the longitudinal direction is a plurality of riser ducts 110, which are each fluidly connected to the manifold 105 and run to a vertically higher region of the aircraft 1. In the illustrated example, the riser duct 110 is fluidly connected to a lateral cross duct 117 or a lateral air outlet box 118, but can be connected or continued up to a longitudinal crown manifold 115. It is to be understood that Figure 1 illustrates a duct 117 and an outlet box 118 on respective sides of the aircraft 1 for illustrative purposes only. Thus, the duct 117 or the outlet box 118 can be provided on both sides.

The air distributed by the riser ducts 110 and longitudinal crown manifold 115 can be provided to the cabin of the aircraft 1, as it is illustrated in Figure 1 by arrows leaving the longitudinal crown manifold 115 and air nozzles 130 underneath the stowage compartments 20. The air nozzles 130 may be general air distribution nozzles or personal air nozzles above each seat rows 30. As a mere example, the air nozzles 130 can be fluidly connected to the lateral air outlet box 118.

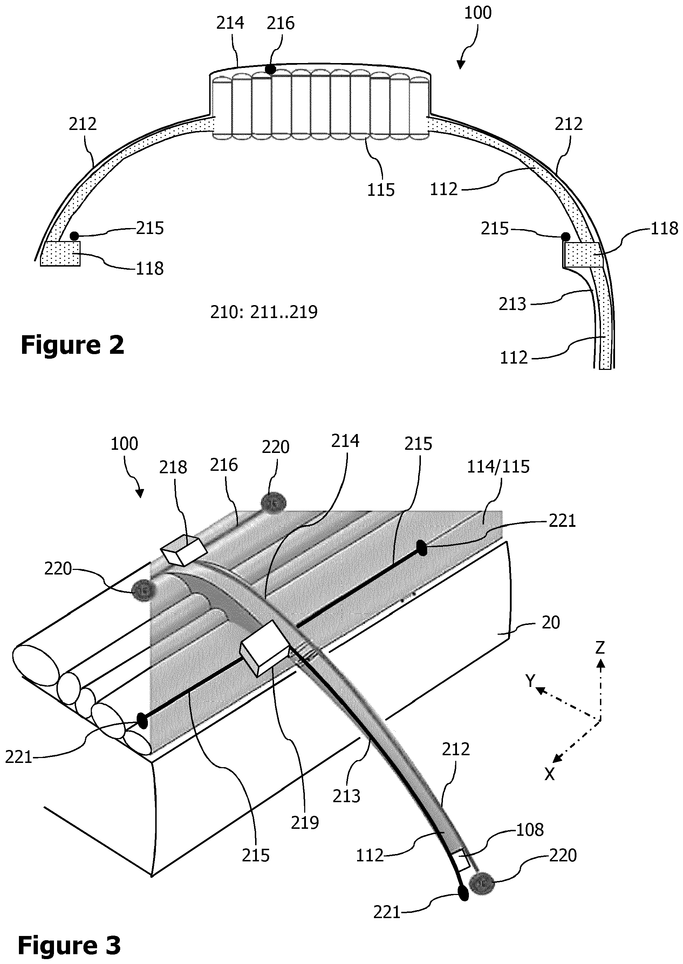

Figure 2 schematically illustrates one exemplary air distribution system 100 having a utility line attached to a fabric manifold. Specifically, this example of the present disclosure illustrates a longitudinal crown manifold 115, which is illustrated as having a plurality of individual inflatable bodies arranged side-by-side. It is to be understood that such inflatable bodies are in fluid communication with one another, for example, via through holes in the sidewalls of each body, so that the entire manifold 115 is inflated. The sidewalls mainly provide the shape of the crown manifold 115. It is to be understood that instead of sidewalls, strings or ribbons may be used. The crown manifold 115 in Figure 2 is illustrated in the inflated state. The air for inflating the crown manifold 115 is provided via riser ducts 112, which may extend from the longitudinal base manifold 105, a lateral air outlet box 118 (as illustrated), a lateral cross duct 117 and/or another riser duct 110.

Utility lines 212, 213 are illustrated spaced apart from the riser duct 112, which is only to show the utility line 212, 213 clearly in the drawing. As will be outlined in more detail below, the utility line 212, 213 can be provided on or in the fabric air manifold 112. Thus, an electric or data signal, water or gas can be provided from a vertically lower position to a vertically upper position by installing the utility line 212, 213 together with the air distribution system 100.

As mere examples, the utility line 212 can be an electric or data line, such as a cable, wire or glass fibre, and utility line 213 can be a fluid line, such as a water line configured to conduct (potable) water or a gas line, implemented, for example, as a pipe or hose.

Figure 2 further illustrates an arc-shaped electric or data line 214 at the top of the crown manifold 115, as well as an electric or data line 216 arranged in the longitudinal direction of the crown manifold 115 (which corresponds to the longitudinal direction of the aircraft 1). The arc-shaped electric or data line 214 can support the fabric air manifold 115, and the electric or data line 212 arranged in a top region of riser duct 112 can support the fabric riser duct 112. Thus, when the corresponding manifolds 112, 115 deflate, at least a portion of the manifold is supported by the electric or data line 212, 214, so that the manifold 112, 115 may keep its form, at least in a vertical direction. In other words, the deflated manifold may hang from the electric or data line 212, 214.

Likewise, the fluid line 213 can support the fabric air manifold 112. Specifically, when the riser fabric air manifold 112 is deflated, a hull of the fabric air manifold 112 is kept in shape due to the fluid line 213.

The reference numeral 210 is used to refer to all utility lines or associated utility components 211 to 219.

Furthermore, Figure 2 further illustrates lateral air outlet boxes 118 that extend in the longitudinal direction of the aircraft 1. Such lateral air outlet boxes 118 are used to distribute air from the riser manifold 112 in the longitudinal direction, for example, to corresponding air outlets. A longitudinal utility line 215 can be arranged on the lateral air outlet box 118. Specifically, in case the air distribution is operating, i.e. air is distributed via riser fabric air manifold 112 and lateral outlet box 118, utility lines 212, 213, 215 are in indirect or direct thermal contact with the distributed air. Thus, fluid lines, particularly water lines, such a water lines 213, 215, are prevented from freezing, which may happen in this region of the aircraft 1, i.e. close to the outer skin (not illustrated in Figure 2). Therefore, dedicated electrical heaters for the water lines 213, 215 can be omitted, which saves weight and costs.

In certain configurations of the aircraft 1, a standard interface point can be provided at the lateral outlet box 118 or in its vicinity. Specifically, a flex zone can be provided in the aircraft 1, where the interior configuration of the aircraft 1, particularly the cabin, can be changed during operation of the aircraft. Thus, the flex zone is prepared to different components to be installed therein. This includes a standard interface point, for example, for air outlets (personal air outlets for passenger seats as well as monument air outlets), for electrical/data connections, and for water connections.

The present disclosure allows providing such standard interface point at or close to the lateral air outlet box 118, including one or more utility lines 210 for such flexible configuration of the aircraft 1. As a mere example, for those aircrafts 1 that have monuments in the flex zone with customer-specific monument positions, the "last meter" of the utility line 210 can be routed from this interface point along the lateral air outlet box 118 (LAO box) to the monument with a length depending on the monument position (even late in the aircraft production process or even after a previous operation of the aircraft in a different configuration, and without impact on the standard part of the water installation). For those aircraft 1 that do not have monuments in the flex zone the standard interface point is closed by a blind plug (without creating a dead-end).

Figure 3 schematically illustrates a perspective view of a different fabric air manifold 114,with utility lines 212, 213, 214, 215, 216 attached thereto. The fabric air manifold 114 is arranged above an overhead stowage compartment 20 (see also Figure 1), particularly, in a space above the overhead stowage compartment 20 and underneath a fuselage of the aircraft 1. While Figure 3 illustrates the fabric air manifold 114 as only being arranged above the overhead stowage compartment 20, it is to be understood that it may also be arranged in a crown area, such as crown manifold 115 of Figure 2. Thus, the present disclosure is not restricted to a dedicated crown manifold 115 and a dedicated overhead stowage compartment manifold 114. Rather, one or more manifolds 114, 115 may be arranged in such a top region of the aircraft, including a single manifold (not illustrated) extending between two oppositely arranged overhead stowage compartments 20 (see Figure 1).

In any case, the manifolds 114, 115 are longitudinal manifolds, i.e. are arranged along a longitudinal direction of the aircraft 1, i.e., the X-axis illustrated in Figure 3. Thus, an electric or data line 216 can be installed in the aircraft 1 along the longitudinal direction and/or a fluid line 215 can be installed in the aircraft 1 along the longitudinal direction, when attached to the manifold 114, 115. As can be further derived from Figure 3, the transversely arranged electric or data line 212 and fluid line 213 attached to the riser duct 110, 112 can be connected to the longitudinally arranged electric or data line 216 and fluid line 215, respectively. Such connection can be facilitated by a connection box 218, 219. It is to be understood that the connection boxes 218, 219 are only one example of a hardware attached to the longitudinal manifold 114, 115. Any kind of hardware required for electrical or data connections and fluid distribution can likewise be attached to the manifold 114, 115 (as well as to the riser duct 110, 112).

Figure 3 illustrates the riser duct 110, 112 to be arranged on top of the longitudinal manifold 114, 115 up to a position, where the longitudinal electric or data line 216 is provided. A portion of the transversely arranged electric or data line 212 and/or transversely arranged fluid line 213 can form the arc-shaped utility line 215, 216 as illustrated in Figure 2. Alternatively, a connection, such as connection box 218, 219, can be provided at a border between the riser duct 110, 112 and a lateral side of the longitudinal manifold 114, 115.

Furthermore, in case a fabric air manifold 110, 112, 114, 115 ends, such as due to a predetermined maximum length, the utility line 210 may end as well. Thus, a plug or connector 220, 221 can be provided, where the utility line 210 can be connected to an associated utility line 210 of an adjacent fabric air manifold 110, 112, 114, 115. The plug or connector 220, 221 can also be a blind plug, in order to allow installation/connection of a utility line to a monument or passenger seats in a flex zone, if required. In other words, the utility line(s) 215, 216 can be arranged in a flex zone of the aircraft 1 and can be used to connect a "last metre" of utility line 210, if, for example, a monument is installed in this flex zone.

Furthermore, at the bottom end of riser duct 110, 112 there is provided a plug or connector 220, 221 that allows an electrical or data connection of the "riser" electric or data line 212 and a fluid connection of the "riser" fluid line 213. For instance, such bottom plug or connector 220, 221 may be connected to a corresponding utility line or hardware in a vertically lower area, such as the cargo area of the aircraft 1.

Figure 3 further illustrates that the cross-sectional shape of the fabric air manifold 114, 115 can have any shape, such as a shape adapted to the available installation space. As mere examples, the shapes of the individual manifold bodies each have an elliptical cross-section as illustrated in Figure 3. The dimensions of such ellipses may increase towards the crown area, as the installation space usually increases in height in this direction. It is to be understood that such shapes and forms and dimensions are for exemplary purposes only, and that the longitudinal manifold 114, 115 can have any cross-sectional shape. It is further to be understood that the longitudinal manifold 114, 115 may not require individual manifold bodies, but can have only one body, i.e. one circumferential exterior hull without interior sidewalls or the like.

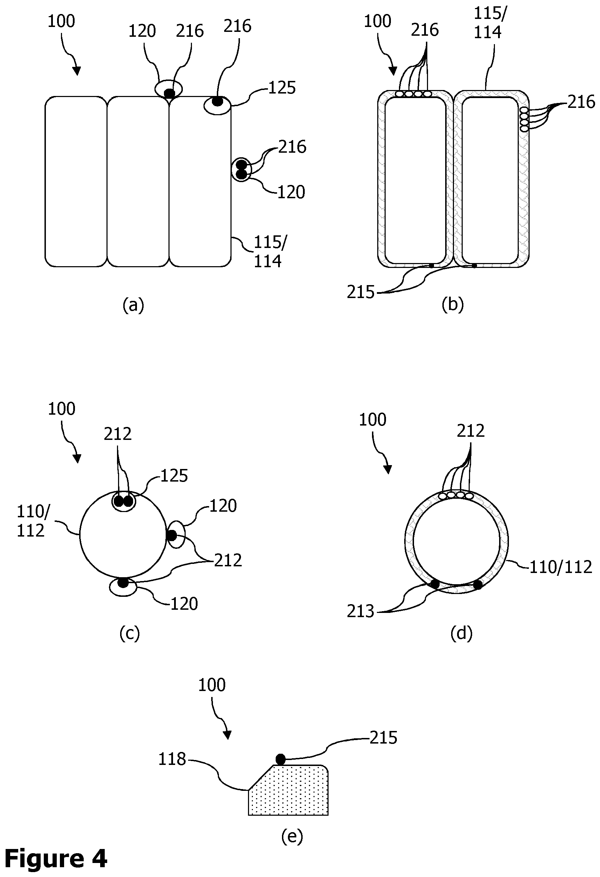

Figure 4 schematically illustrates several examples of an attachment of a utility line 210 to a fabric air manifold 110, 112, 114, 115. The examples (a) and (b) can correspond to cross sections of longitudinal manifolds 114, 115, while examples (c) and (d) can correspond to cross sections of transversal manifolds 110, 112 (such as riser duct), and the example (e) can correspond to a cross-section of a lateral air outlet box 118. Again, as mere examples, the longitudinal fabric air manifolds 110, 112 are illustrated as having individual bodies, although there may only be strings or ribbons instead of sidewalls or no such items at all. Likewise, the riser duct 110, 112 may comprise a plurality of bodies instead of a single cross-sectional shape as illustrated.

According to examples (a) and (c), the fabric air manifold 110, 112, 114, 115 can include a pocket 120, 125, in which the utility line 210 is arranged. Such a pocket 120, 125 may be made of the same material as the fabric air manifold 110, 112, 114, 115. Thus, a pocket 120, 125 can be understood as something similar to an individual body of the manifold 110, 112, 114, 115, but such body may not be fluidly connected to any air guiding portion of the manifold 110, 112, 114, 115, i.e., such pocket 120, 122, 125 may not inflate.

The pocket 120, 122, 125 provides an additional protection for the utility line 210, and particularly avoids a plurality of holders for the utility line 210. As a mere example, a conventional line installation requires a distance between two adjacent holders of at most 20 to 30 mm. This leads to a large amount of holders in a conventional line installation, which can almost entirely be dispensed with when using the air distribution system 100 of the present disclosure.

Furthermore, the pocket 120, 125 allows a high degree of tolerance with respect to a distance to be kept between a line and a primary structure of the aircraft 1. As a mere example, a conventional line installation requires a distance to a primary structure of the aircraft 1 of approximately 20 to 30 mm and between different lines, such as an electric power line, a data signal line, a water line, a gas line, a hydraulic line, etc., of approximately 25 to 50 mm. On the one hand, due to the additional protection provided by the material of the manifold 110, 112, 114, 115, the minimum distance to the primary structure can be reduced. For instance, when being inflated and deflated, the utility line 210 can be pushed against and released from the primary structure several times. However, due to the fabric material of the manifold 110, 112, 114, 115 the utility line 210 can be sufficiently protected.

On the other hand, the cross-section of the manifold 110, 112, 114, 115 provides various positions, where a line 210 can be attached, so that a minimum distance requirement of the utility line 210 to the primary structure of the aircraft 1 and/or another utility line 210 can be complied with. The position of the utility line 210 can be determined taking into account the inflated state of the manifold 110, 112, 114, 115 (where a larger portion of the manifold will be closer to a primary structure) as well as the deflated state (since deflation may relocate at least a portion of the utility line 210).

The pocket 120, 125 can be arranged in an interior space of the manifold 110, 112, 114, 115 or can be arranged on an exterior surface of the manifold 110, 112, 114, 115. Figure 4 illustrates various exemplary positions of a pocket 120, 125 at a single manifold 110, 112, 114, 115. It is to be understood that only one or some of these exemplary positions may be employed or that multiple pockets 120, 125 are arranged in the manner of one of the illustrated individual pockets 120, 125. As can be derived from these examples, the different positions allow complying with minimum distance requirements, i.e., a minimum distance to a primary structure of the aircraft 1 and/or other utility lines 210.

A pocket 120, 125 can be attached to the corresponding manifold 110, 112, 114, 115 by stitching, Velcro, clips, pushbuttons, snap fasteners, gluing, welding and/or brackets. Thus, a detachable or fixed connection between pocket 120, 125 and manifold 110, 112, 114, 115 can be provided depending on the needs to remove the utility line 210 or not.

Moreover, instead of a pocket, the utility line 210can be directly attached to the manifold 110, 112, 114, 115 by stitching, Velcro, clips, pushbuttons, snap fasteners, gluing, welding and/or brackets. For instance, in case no additional protection is required for the utility line 210, such line can be directly attached to the manifold 110, 112, 114, 115.

Velcro may facilitate installation of an utility line 210, since the fabric may function as the loop fastener of the hook and loop design of the Velcro, so that only the hook fasteners need to be provided on the utility line 210.

As can be further derived from Figure 4 (together with Figure 3) the attachment of a utility line 210 to the fabric air manifold 110, 112, 114, 115 at a lateral portion and/or a top portion of a hull forming the fabric air manifold 110, 112, 114, 115 allows stabilising the hull, even if the fabric air manifold 110, 112, 114, 115 is deflated. Due to being more rigid than a fabric, particularly if made from a metal, such as copper or aluminium, or a plastic hose, the utility line 210 can form a support for the hull of the manifold 110, 112, 114, 115 or at least hinders the manifold 110, 112, 114, 115 from sagging or collapsing. As a mere example, if the utility line 210 is arranged to run in a zigzag pattern, it will be arranged in a plane that facilitates support of the hull of the manifold 110, 112, 114, 115 in the directions of this plane. For instance, if such zigzag is provided at a lateral portion or a top portion of the manifold 110, 112, 114, 115, a corresponding support structure can be formed.

A similar effect can be achieved by a pocket formed of a rigid material or at least a material being more rigid than the fabric of the manifold 110, 112, 114, 115.

According to examples (b) and (d) of Figure 4, the fabric air manifold 110, 112, 114, 115 can be made from a spacer fabric forming a three-dimensional textile. Specifically, the fabric used to manufacture the air manifold 110, 112, 114, 115 can have a particular thickness and the spacer fabric encloses air spaces. In such case, the fabric alone provides enough space to attach the utility line 210. In other words, the utility line 210 can be integrated into the material of the fabric air manifold 110, 112, 114, 115.

The utility line 210 can comprise one or more of an electric power cable, a data cable, a power and/or data distribution hardware 218, a fluid line, and/or a fluid distribution hardware 219, and can be made from copper, aluminium or can be a glass fibre (in case of an electric or data line), or a plastic material, aluminium, titanium or the like (in case of a fluid line). Particularly, if a glass fibre is used as a data line 210, due to its small diameter it can be easily integrated into the material of the fabric air manifold 110, 112, 114, 115.

Figure 4 further illustrates examples, where a utility line 210 is arranged at a top region as well as a bottom region of the hull of the fabric air manifold 110, 112, 114, 115. This facilitates stabilising of the hull, particularly in a deflated state (not illustrated) of the fabric air manifold 110, 112, 114, 115. Due to the higher rigidity of the utility line 210 compared to the fabric of the fabric air manifold 110, 112, 114, 115, the network of lines 210 may hold the top portion and bottom portion of the hull substantially in position, even if no air is distributed through the fabric air manifold 110, 112, 114, 115, i.e. when it is deflated.

Figure 4(e) schematically illustrates a cross-section of the lateral air outlet box 118, to which a utility line 215 is attached. Specifically, the utility line 215 can be a fluid line, such as a water line 215. The attachment to the lateral air outlet box 118 can be achieved as described above, for example, by employing a Velcro connection, pushbuttons, snap fasteners, gluing or welding, to name a few. Due to the proximity to the air conducting lateral air outlet box 118, the utility line 215 is not at risk of freezing, particularly during operation of the air-conditioning unit 10. Regularly, air distributed through the aircraft 1 is at a temperature above 0°C. Thus, in case of a water line 215, the water is not at risk of freezing. When the air-conditioning unit 10 is not operating, such as during a shutdown of the aircraft, the water network is regularly drained, so that the risk of freezing is not present at this time.

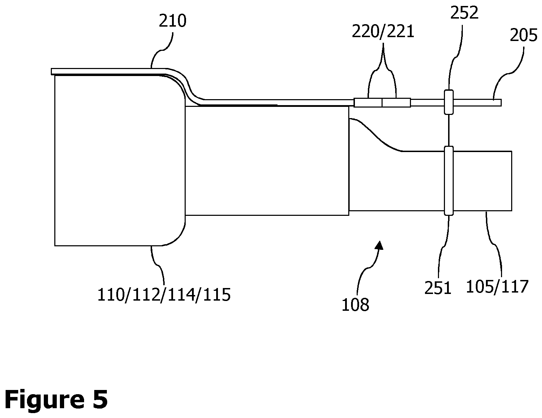

Figure 5 schematically illustrates a connection 108 of a fabric air manifold 110, 112, 114, 115 and associated utility line 210. Specifically, to the left in Figure 5 is an illustrative example of an end of a riser duct 110, 112 made from a fabric or textile, and to the right in Figure 5 is an illustrative example of an end of a supply duct, such as longitudinal base manifold 105, lateral cross duct 117 or lateral outlet box 118. The connection 108 can be made from a more rigid material, such as a plastic material or metal. A diameter of the connection 108 may be smaller compared to the inflated fabric air manifold 110, 112, 114, 115, but this is only an illustrative example.

A bracket or holder 251 is mounted to the more rigid connector 108, to which a further line bracket or holder 252 is fixed. This line bracket or holder 252 can hold a utility supply line 205.

When installing the fabric air manifold 110, 112, 114, 115 in the aircraft 1, it may be brought into fluid connection with the supply duct 105, 117 by coupling the latter with the connector 108. At the same time or thereafter, a connection 220, 221 between the utility line 210 and the utility supply line 205 can be closed. As a mere example, a plug and socket connection 220 may be provided, in order to electrically and/or optically and/or fluidically connect the utility line 210and the utility supply line 205. The utility line 210 does not require a distinct bracket or holder, as it is attached to the fabric air manifold 110, 112, 114, 115.

It is to be understood that a plurality of utility lines 210 can be provided at the fabric are manifold 110, 112, 114, 115, each of which is connected to a corresponding supply line 205 by a respective connector 220, 221.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An air distribution system (100) for an aircraft (1), comprising:
at least one fabric air manifold (110, 112, 114, 115); and
a utility line (210) attached to the at least one fabric air manifold.

2. The air distribution system (100) of claim 1, wherein the at least one fabric air manifold (110, 112, 114, 115) comprises one or more of:
a riser duct (110, 112);
a lateral cross duct (117);
a longitudinal component manifold (114);
a longitudinal crown manifold (115); and
a longitudinal base manifold (105).

3. The air distribution system (100) of claim 1 or 2, wherein the at least one fabric air manifold (110, 112, 114, 115) comprises a pocket (120, 125), wherein the utility line is arranged inside the pocket.

4. The air distribution system (100) of claim 3, wherein the pocket (120, 125) is arranged in an interior space of the fabric air manifold or arranged on an exterior surface of the fabric air manifold.

5. The air distribution system (100) of one of claims 1 to 4, wherein the utility line (210) is attached to the at least one fabric air manifold using stitching, Velcro, clips, pushbuttons, snap fasteners, gluing, welding and/or brackets.

6. The air distribution system (100) of claim 1 or 2, wherein the at least one fabric air manifold (110, 112, 114, 115) is made from a spacer fabric forming a three-dimensional textile, and wherein the utility line (210) is arranged inside of the spacer fabric.

7. The air distribution system (100) of one of claims 1 to 6, wherein the utility line (210) comprises one or more of:
an electric power cable;
a data cable;
a power and/or data distribution hardware (218);
a fluid line; and
a fluid distribution hardware (219),
wherein, preferably, the electric or data line (210) is made from copper, aluminium, or is a glass fibre, and, further preferably, the fluid line is made from a plastic material, copper, aluminium, or titanium.

8. The air distribution system (100) of one of claims 1 to 7, wherein the utility line (210) is arranged at or in a lateral portion and/or top portion of a hull forming the fabric air manifold.

9. The air distribution system (100) of claim 8, when being dependent on claim 7, wherein the electric power cable and/or data cable is arranged at a top portion of the hull forming the fabric air manifold, and the water line is arranged at a lateral portion and/or a bottom portion of the hull forming the fabric air manifold.

10. The air distribution system (100) of one of claims 1 to 9, wherein the utility line (210) is arranged to run in a longitudinal direction of the fabric air manifold, a transverse direction of the air fabric manifold, or in a zigzag pattern.

11. An aircraft (1), comprising:
at least one air distribution system (100) of one of claims 1 to 10.
